# EUROPÄISCHE PATENTSCHRIFT

(11) **EP 2 150 362 B1**
(45) Veröffentlichungstag und Bekanntmachung des Hinweises auf die Patenterteilung: **20.06.2012**
(21) Anmeldenummer: 08734467.7
(22) Anmeldetag: 02.04.2008
(51) Int. Cl.: B21B 37/00, B21B 38/00, G01B 11/30, G01N 21/89

(54) **VERFAHREN ZUR ERKENNUNG UND KLASSIFIZIERUNG VON OBERFLÄCHENFEHLERN AUF STRANGGEGOSSENEN BRAMMEN**
METHOD FOR DETECTING AND CLASSIFYING SURFACE DEFECTS ON CONTINUOUSLY CAST SLABS
PROCÉDÉ DE RECONNAISSANCE ET DE CLASSIFICATION DE DÉFAUTS DE SURFACE SUR DES BRAMES COULÉES EN CONTINU

(30) Priorität: 24.04.2007 DE 102007020240
(43) Veröffentlichungstag der Anmeldung: 10.02.2010
(73) Patentinhaber: SMS Siemag AG, 40237 Düsseldorf (DE)
(72) Erfinder: ROSENTHAL, Dieter, 57572 Niederfischbach (DE); SCHULZE, Stephan, 40880 Ratingen (DE); SCHUSTER, Ingo, 47877 Willich (DE); SUDAU, Peter, 57271 Hilchenbach (DE); FACKERT, Rainer, 56584 Meinborn (DE); WEINERT, Andreas, 45257 Essen (DE); SCHUMACHER, Wilfried, 42579 Heiligenhaus (DE)
(74) Vertreter: Klüppel, Walter
(86) Internationale Anmeldenummer: PCT/DE2008/000582
(87) Internationale Veröffentlichungsnummer: WO 2008/128504

(56) Entgegenhaltungen:
- EP-A- 0 093 422
- EP-A- 0 880 023
- EP-A- 1 097 764
- DE-A1- 19 930 173

## Beschreibung

Die Erfindung Verfahren zur Erkennung und Klassifizierung von Oberflächenfehlern auf stranggegossenen Produkten unter Nutzung von topographischen Informationen über das Aussehen von stranggegossenen Oberflächen, wobei Fehler und /oder Ungänzen positionsgenau ermittelt und bewertet werden.

Es sind zahlreiche Verfahren zur Detektion von Oberflächenfehlern auf Materialien, wie Stranggießprodukten, bekannt und deren damit gekoppelte Beseitigung.

So können beispielsweise nach der EP 0 880 023 A1 Oberflächenfehler automatisch detektiert und durch eine nachgeschaltete Schleifmaschine vor der Weiterverarbeitung, also dem Fertigwalzen in einer Walzstraße abgetragen werden. Die dabei eingesetzte Schleifmaschine kann reversierend arbeiten, so dass mit einer vor der Schleifmaschine und einer nach der Schleifmaschine angeordneten Beobachtungseinrichtung nacheinander bzw. über größere Flächen verteilt Fehler festgestellt und dann beseitigt werden können.

Bei diesen Verfahren wird die Bewertung der Fehler an Hand von Vergleichen mit abgespeicherten Mustern vorgenommen, so dass die Qualität der Fehlererkennung und damit Beseitigung von dem Material abhängt, was abgespeichert worden ist.

Überflüssige Arbeitsvorgänge lassen sich dadurch nicht immer vermeiden.

Grundsätzlich sollten nur solche Oberflächenfehler erkannt und bewertet werden, welche auch zu Fehlern am gewalzten Produkt, z. B. Warmband oder Blech führen. Alle anderen Ungänzen auf der Brammenoberfläche müssten nicht berücksichtigt werden.

Aufgabe der Erfindung ist es daher, ein Verfahren zu schaffen, mit dessen Hilfe eine zuverlässigere und nur tatsächlich notwendige Fehlerbewertung und dann Beseitigung erreichbar ist.

Dabei sollen die so gewonnenen Informationen entsprechend der Bewertung zur Beseitigung der Fehler vor der weiteren Bearbeitung des Produktes oder zur frühzeitigen Bestimmung und Eingruppierung der möglichen Qualität des Fertigproduktes genutzt werden.

Gelöst wird diese Aufgabe mit einem Verfahren zur Erkennung und Klassifizierung von Oberflächenfehlern auf stranggegossenen Produkten unter Nutzung von topographischen Informationen über das Aussehen von stranggegossenen Oberflächen, wobei Fehler und /oder Ungänzen positionsgenau ermittelt, in Lage und Ausdehnung bewertet und entsprechend der. Bewertung vor der weiteren Bearbeitung des Produktes beseitigt werden, dadurch, dass einerseits die Fehler und/oder Ungänzen auf der Brammenoberfläche des stranggegossenen Vorproduktes erfasst und lagegenau gespeichert werden und andererseits eine Erfassung von Fehlern und/oder Ungänzen auf dem Fertigprodukt erfolgt und lagegenau gespeichert wird und dass dann die Informationen vom Vorprodukt mit denen aus der Oberflächeninspektion auf dem Fertigprodukt verglichen werden, und nur solche Informationen für eine Beseitigung von Fehlern und/oder Ungänzen am Vorprodukt berücksichtigt werden, welche zu Fehlern auf dem Fertigprodukt geführt haben bzw. führen können.

Erfindungsgemäß wird die Oberflächentopographie der stranggegossenen Brammen mit geeigneten Verfahren ermittelt. Hierbei kommen optische Verfahren, welche im sichtbaren oder unsichtbaren Bereich des Lichtes arbeiten oder mikrowettenbasierende Verfahren zur Anwendung. Im optischen Bereich werden Streifenproduktions - oder Stereoskopische-Verfahren eingesetzt. Laserbasierende Verfahren sind ebenso möglich. Die mittels eines oder mehrerer dieser Verfahren erfassten Informationen über die Oberflächentopographie werden ortsgebunden, also positionsentsprechend gespeichert. Die Auswertung von erfassten Topographieänderungen kann über geeignete Klassifizierverfahren, z. B. neuronale Netze oder andere, erfolgen.

Erfindungsgemäß zeichnet sich das Verfahren durch eine Lernphase aus, während der die Klassifizierverfahren dahingehend optimiert werden, das zwischen unrelevanten Oberflächenungänzen und relevanten Oberflächenfehlern, welche auf den fertig gewalzten Produkten, hier Warmband oder Blech, zu Oberflächenfehlern führen bzw. geführt haben, unterschieden werden kann.

Hierzu erfolgt eine Kopplung der Ergebnisse einer Oberflächeninspektion am Fertigprodukt mit dem Brammeninspektionssystem. Insbesondere erfolgt eine Umrechnung der absoluten Position der Fehler auf dem Fertigprodukt in die absolute Position auf der Brammenoberfläche. Dafür werden die Daten des Stichplanes, wie Gesamtumformgrad und Verhältnis Quer- und Längswalzen, in das Modell einbezogen. Die Informationen über die Position eines voraussichtlichen Oberflächenfehlers auf der Bramme werden gespeichert und mit den Informationen verglichen, welche das Inspektionssystem nach dem Fertigwalzen ermittelt, so dass hier der selbst lernende Effekt entsteht.

Die mit Hilfe der Klassifizierverfahren, z. B. neuronaler Netze, gefundenen Zusammenhänge zwischen der Topographie und der Wahrscheinlichkeit des Auftretens von Oberflächenfehlern werden dann für eine Vorhersage genutzt.

Das Verfahren ist in der Lage sowohl heiße als auch kalte Brammenoberflächen zu vermessen, wobei entweder die Bramme oder die Messeinrichtung während der Messung verfahren wird. Dabei kann die Bewegung in diskreten Schritten oder auch kontinuierlich erfolgen.

Die so erhaltenen topographischen Informationen können entsprechend dem Ergebnis der Klassifizierung mit ihrer absoluten Position gespeichert werden.

Die Entscheidung, ob ein Oberflächenfehler vorliegt, welcher vor der Weiterverarbeitung von der Brammenoberfläche entfernt werden kann oder auf dem Fertigprodukt zu einer Qualitätseinbuße führt, macht - wie oben erwähnt - eine Lernphase notwendig. Dieses Anlernen kann manuell durch Vorgaben von Inspektoren erfolgen, ist dann aber subjektiven Fehlern unterworfen. Erfindungsgemäß wird daher diese Aufgabe durch eine Kopplung mit Oberflächeninspektionssystemen am Fertigprodukt bewältigt.

Bei Verwendung des Verfahrens in einer nicht gekoppelten Anlage (Brammenstranggießanlage und Walzwerk) ohne direkten Einsatz der Bramme oder bei zugekauften Brammen ist dieser Lernalgorithmus über eine Langzeitdatenbank zu realisieren.

Eine weitere Möglichkeit besteht in der Nutzung dieses Systems im Rahmen einer automatisierten Brammeninspektion. Hier werden die Fehler von einem Markierroboter angezeichnet und erleichtern das Auffinden für die Reparatur. Die Lageinformationen können auch an ein Bearbeitungszentrum zur automatischen Reparatur weitergeleitet werden.

Das erfindungsgemäße Verfahren soll nachfolgend unter Bezug auf die Zeichnungen erläutert werden.

Dabei zeigt:
Fig. 1 eine Probe, bei der künstlich Ungänzen, also Fehler eingebracht worden sind,
Fig. 2 das Ergebnis einer Vermessung der Probe mittels eines Streifenprojektionsverfahrens, und zwar der Linie 5 in Figur 1,
Fig. 3 die topographische Auswertung dieser Linie,
Fig. 4 ein Ausführungsbeispiel für eine Messeinrichtung und
Fig. 5 das Prinzip des Inspektions-und Bewertungssystem gemäß der Erfindung.

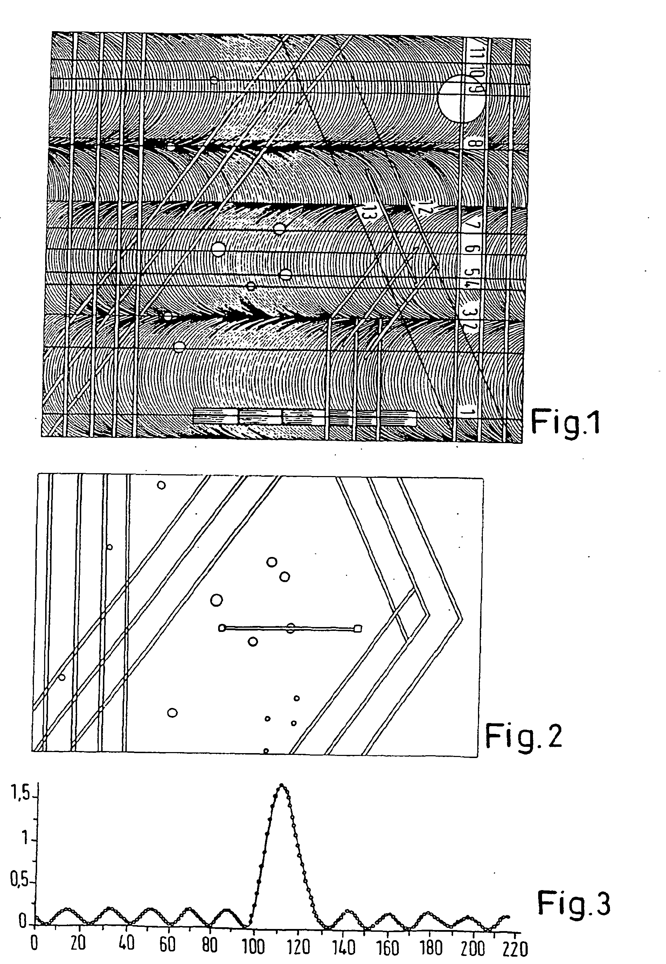

Zur Erläuterung des Verfahrens wurden in eine Probe Ungänzen künstlich eingebracht. Dies ist in der Figur 1 erkennbar. Auf der rechten Seite des Bildes sind Linien bezeichnet, wobei hier beispielsweise auf die Linie 5 für die nachfolgende Beschreibung zurückgegriffen werden soll.

Die Probe wurde mittels eines Streifenprojektionsverfahrens vermessen und das Ergebnis ist für die Linie 5 in der Figur 2 dargestellt.

Die topographische Information lässt eine Zuordnung zu einem punktförmigen Fehler zu, wie dies in der Figur 3 gezeigt ist.

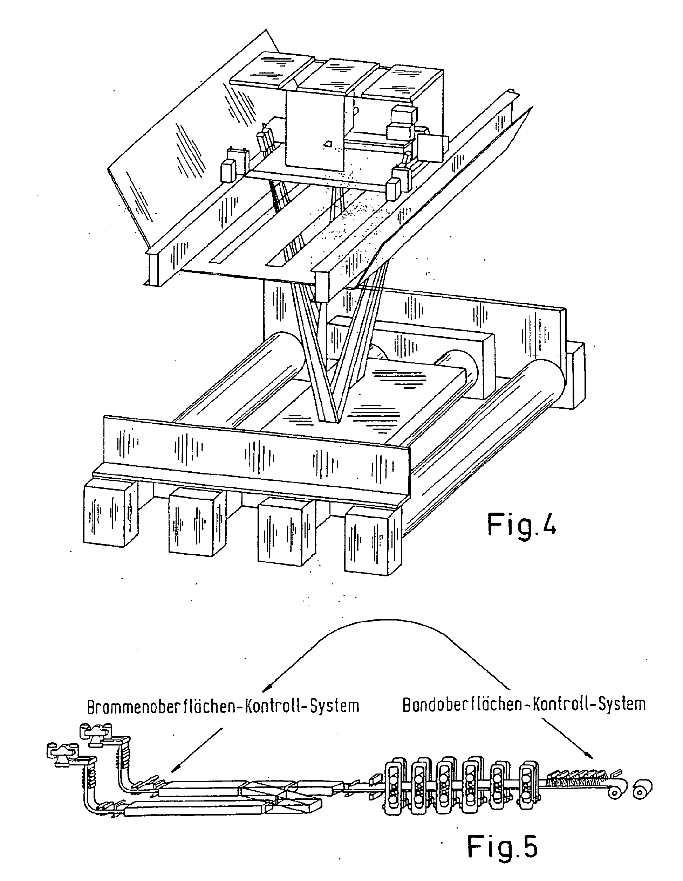

Die Figur 4 zeigt ein Beispiel für die Anordnung der Messvorrichtung mit Projektor und Kamera oberhalb eines Rollganges, der zum Transport der Brammen dient.

Schließlich zeigt die Figur 5 noch die prinzipielle Idee, wobei durch die erste Oberflächeninspektion die Fehler und/oder Ungänzen auf dem Vorprodukt, also der Bramme, erfasst werden und dann eine zweite Inspektionseinrichtung Fehler und/oder Ungänzen auf dem gewalzten Fertigprodukt erkennt. Durch den dann durchgeführten Vergleich, kann eine Aussage getroffen werden, welcher zu erst erkannte Fehler auch dann auf dem Fertigprodukt zu einem Fehler geführt hat, so dass hierdurch ein Lernprozess ausgelöst werden kann, der zu einer besseren Bewertung von Fehlern auf dem Vorprodukt führt, mit der Folge, dass auch nur die Fehler beseitigt werden müssen, die für das Fertigprodukt nachteilig sind.

## Patentansprüche

1. Verfahren zur Erkennung und Klassifizierung von Oberflächenfehlern auf stranggegossenen Produkten unter Nutzung von topographischen Informationen über das Aussehen von stranggegossenen Oberflächen, wobei Fehler und /oder Ungänzen positionsgenau ermittelt, in Lage und Ausdehnung bewertet und entsprechend der Bewertung vor der weiteren Bearbeitung des Produktes beseitigt werden oder durch Prozeßoptimierung vermieden werden,
**dadurch gekennzeichnet,**
**dass** einerseits die Fehler und/oder Ungänzen auf der Brammenoberfläche des stranggegossenen Vorproduktes erfasst und lagegenau gespeichert werden und andererseits eine Erfassung von Fehlern und/oder Ungänzen auf dem Fertigprodukt erfolgt und lagegenau gespeichert wird und dass dann die Informationen vom Vorprodukt mit denen aus der Oberflächeninspektion auf dem Fertigprodukt verglichen werden, und nur solche Informationen für eine Beseitigung von Fehlern und/oder Ungänzen am Vorprodukt berücksichtigt werden, welche zu Fehlern auf dem Fertigprodukt geführt haben bzw. führen können.

2. Verfahren nach Anspruch 1,
**dadurch gekennzeichnet,**
**dass** die topographischen Informationen mittels optischer Verfahren, welche im sichtbaren oder unsichtbaren Bereich arbeiten ermittelt werden.

3. Verfahren nach Anspruch 1,
**dadurch gekennzeichnet,**
**dass** die topographischen Informationen durch laser-oder mikrowellenbasierende Verfahren ermittelt werden.

4. Verfahren nach Anspruch 2,
**dadurch gekennzeichnet,**
**dass** die topographischen Informationen mittels Streifenprojektions- oder Stereoskopische Verfahren erhalten werden.

5. Verfahren nach Anspruch 1,
**dadurch gekennzeichnet,**
**dass** die topographischen Informationen mittels sichtbarer oder unsichtbarer Quellen elektromagnetischer Strahlung erhalten werden.

6. Verfahren nach einem der vorstehenden Ansprüche,
**dadurch gekennzeichnet,**
**dass** die erfassten und ortsgebunden gespeicherten Informationen über Klassifizierverfahren , wie neuronale Netz, ausgewertet werden.

7. Verfahren nach einem der vorstehenden Ansprüche,
**dadurch gekennzeichnet,**
**dass** während der Lernphase nur solche Bereiche der Brammenoberfläche fehlerhaft ewertet oder berücksichtigt werden, welche auf dem fertig gewalzten Produkt, wie einem Warmband oder Blech, zu Oberflächenfehlern führen.

8. Verfahren nach einem der vorstehenden Ansprüche,
**dadurch gekennzeichnet,**
**dass** eine Umrechnung der absoluten Position der Fehler auf dem Fertigprodukt in die absolute Position auf der Brammenoberfläche erfolgt, wobei hierfür die Daten des Stichplanes, wie Gesamtumformgrad und Verhältnis Quer- und Längswalzen, in die Berechnung einbezogen werden.

9. Verfahren nach einem der vorstehenden Ansprüche,
**dadurch gekennzeichnet,**
**dass** die mit Hilfe neuronaler Netze oder anderer Verfahren gefundenen Zusammenhänge zwischen der Topographie und der Wahrscheinlichkeit des Auftretens von Oberflächenfehlern für eine Vorhersage genutzt werden.

10. Verfahren nach Anspruch 8,
**dadurch gekennzeichnet,**
**dass** die so erhaltenen topographischen Informationen je nach Ergebnis mit ihrer absoluten Position gespeichert werden.

11. Verfahren nach einem der vorstehenden Ansprüche,
**dadurch gekennzeichnet,**
**dass** die Nutzung im Rahmen einer automatisierten Brammeninspektion erfolgt, wobei die Fehler von einem Markierroboter angezeichnet werden.

12. Verfahren nach einem der vorstehenden Ansprüche,
**dadurch gekennzeichnet,**
**dass** die aus dem Vergleich der Informationen erhaltenen Bearbeitungsinformationen an ein Bearbeitungszentrum zur automatischen Reparatur weitergeleitet werden.

## Claims

1. Method of recognising and classifying surface defects on continuously cast products with use of topographical data about the appearance of continuously cast surfaces, wherein defects and/or imperfections are determined precisely in position, evaluated in position and extent and in correspondence with the evaluation are eliminated before further processing of the product or are avoided by process optimisation, **characterised in that** on the one hand the defects and/or imperfections on the slab surface of the continuously cast starting product is or are detected and stored precisely with respect to position and on the other hand a detection of defects and/or imperfections on the finished product is carried out and stored precisely with respect to position and that then the data from the starting product are compared with those from the surface inspection on the finished product and only those data for elimination of defects and/or imperfections at the starting product are taken into consideration which have led or can lead to defects on the finished product.

2. Method according to claim 1, **characterised in that** the topographical data are ascertained by means of optical methods which operate in the visible or invisible range.

3. Method according to claim 1, **characterised in that** the topographical data are ascertained by laser-based or microwave-based methods.

4. Method according to claim 2, **characterised in that** the topographical data are obtained by means of strip-projection or stereoscopic methods.

5. Method according to claim 1, **characterised in that** the topographical data are obtained by means of visible or invisible sources of electromagnetic radiation.

6. Method according to any one of the preceding claims, **characterised in that** the data detected and stored to be fixed with respect to location are evaluated by way of classification methods such as neuronal networks.

7. Method according to any one of the preceding claims, **characterised in that** during the learning phase only those regions of the slab surface are evaluated as or considered to be defective which lead to surface defects on the product rolled to finished state, such as a hot strip or a sheet.

8. Method according to any one of the preceding claims, **characterised in that** recalculation of the absolute position of the defects on the finished product into the absolute position on the slab surface is carried out, wherein for that purpose the data of the pass plane, such as total degree of reshaping and ratio of transverse and longitudinal rolls, are included in the calculation.

9. Method according to any one of the preceding claims, **characterised in that** the correlations, which are found with the help of neuronal networks or other methods, between the topography and the probability of occurrence of surface defects are used for a prediction.

10. Method according to claim 8, **characterised in that** the thus-obtained topographical data are stored according to the respective result together with the absolute position thereof.

11. Method according to any one of the preceding claims, **characterised in that** the use takes place within the scope of an automated slab inspection, wherein the defects are marked by a marking robot.

12. Method according to any one of the preceding claims, **characterised in that** the processing data obtained from the comparison of the data are passed on to a processing centre for automatic repair.

## Revendications

1. Procédé de reconnaissance et de classification de défauts de surface sur des produits coulés en continu en utilisant des informations topographiques sur l'aspect des surfaces coulées en continu, dans lequel des défauts et/ou des discontinuités sont déterminés exactement en position, évalués quant à leur position et leur extension et, en correspondance de l'évaluation, éliminés avant la poursuite du traitement du produit, ou évités par optimisation du processus, **caractérisé en ce que**
d'une part les défauts et/ou les discontinuités sur la surface des brames du produit précurseur coulé en continu sont détectés et leur position exacte est mémorisée, et
d'autre part on procède à une détection de défauts et/ou de discontinuités sur le produit fini et on mémorise leur position exacte, et **en ce que** les informations du produit précurseur sont comparées avec celles provenant de l'inspection de surface sur le produit fini, et on ne tient compte, pour une élimination de défauts et/ou de discontinuités sur le produit précurseur, que de celles des informations qui ont mené ou peuvent mener à des défauts sur le produit fini.

2. Procédé selon la revendication 1,
**caractérisé en ce que** les informations topographiques sont déterminées au moyen de procédés optiques qui travaillent dans la plage visible ou invisible.

3. Procédé selon la revendication 1,
**caractérisé en ce que** les informations topographiques sont déterminées par des procédés basés sur des lasers ou des micro-ondes.

4. Procédé selon la revendication 2,
**caractérisé en ce que** les informations topographiques sont obtenues au moyen de procédés de projection en bande ou de procédés stéréoscopiques.

5. Procédé selon la revendication 1,
**caractérisé en ce que** les informations topographiques sont obtenues au moyen de sources visibles ou invisibles de rayonnements électromagnétiques.

6. Procédé selon l'une des revendications précédentes,
**caractérisé en ce que** les informations détectées et mémorisées en association avec la localisation sont évaluées via des procédés de classification, tels que des réseaux neuronaux.

7. Procédé selon l'une des revendications précédentes,
**caractérisé en ce que**, pendant la phase d'apprentissage, on évalue comme défectueuses ou on ne tient compte que de celles des zones de la surface des brames qui mènent à des défauts de surface sur le produit laminé fini, comme une bande ou une tôle laminée à chaud.

8. Procédé selon l'une des revendications précédentes,
**caractérisé en ce que** l'on procède à une conversion de la position absolue des défauts sur le produit fini pour donner la position absolue sur la surface des brames, et on utilise à cet effet dans le calcul les données du plan de coulée, comme le degré de déformation global et le rapport laminage transversal/laminage longitudinal.

9. Procédé selon l'une des revendications précédentes,
**caractérisé en ce que** les rapports, trouvés à l'aide de réseaux neuronaux ou d'autres procédés, entre la topographie et la probabilité d'apparition de défauts de surface sont utilisés pour une prévision.

10. Procédé selon la revendication 8,
**caractérisé en ce que** les informations topographiques ainsi obtenues sont mémorisées selon le résultat avec leur position absolue.

11. Procédé selon l'une des revendications précédentes,
**caractérisé en ce que** l'utilisation a lieu dans le cadre d'une inspection automatisée des brames, et les défauts sont marqués par un robot marqueur.

12. Procédé selon l'une des revendications précédentes,
**caractérisé en ce que** les informations de traitement obtenues de la comparaison des informations sont transmises à un centre d'usinage pour la réparation automatique.
